# EUROPEAN PATENT SPECIFICATION

(11) **EP 0 639 414 B1**
(45) Date of publication and mention of the grant of the patent: **11.02.1998**
(21) Application number: 94111442.3
(22) Date of filing: 22.07.1994
(51) Int. Cl.: B21D 43/18, B65G 57/18, B65G 57/081

(54) **Packing system for rolling-mill stock by means of an improved suspended transfer means**
Paketieranlage für Walzgut mit einer hängenden Transfervorrichtung
Système à paqueter de matières à laminer à un dispositif de transfert suspendu

(30) Priority: 19.08.1993 IT US930168
(43) Date of publication of application: 22.02.1995
(73) Proprietor: S.I.M.A.C S.p.A., I-33017 Tarcento (Udine) (IT)
(72) Inventor: Offoiach, Renzo, I-33017 Tarcento (UD) (IT)
(74) Representative: D'Agostini, Giovanni, Dr.

(56) References cited:
- EP-A- 0 380 766
- EP-A- 0 503 342
- EP-A- 0 511 481
- EP-A- 0 544 972
- AT-B- 253 426
- DE-B- 2 230 715

## Description

This invention has for object a packing plant for rolling-mill stock according to the preamble of claim 1, with a productivity increasing device.

At the present state of technology is known the necessity to pack at greater speed in an area commonly called a packing zone, metallic rolling-mill stock, (section bars, bars, plates, etc.) that come from a rolling-mill plant after being cut into a pre-determined length to form the respective packages.

The formation of rolling-mill stock packages according to the present invention occurs by means of stratification, that is by superimposed layers.

In some cases it is also necessary to alternatively overturn the respective layers to carry out self-binding of the package as for example for the angles (an upright and an overturned layer respectively of "n" rolling-mill stock and "n-1" rolling-mill stock).

One can also verify the necessity of formation of a package of flat rolling-mill stock of convenient width by means of the advancement of one rolling-mill stock at a time, for this reason we will hereafter use the definition "rolling-mill stock/layer of rolling-mill stock", this means that the layer of rolling-mill stock (in the case of wide plates), can also be reduced to one.

The present invention makes specific reference to packing systems with suspended rolling-mill stock transfer means, as described in the italian patent applications S.I.M.A.C. S.p.A. n°UD91A000030 and n°.UD91A000031.

In particular IT-UD91A000030 and IT-UD91A000031, extended as European Patent Application 92103035.9. (publication EP-A-0503342), foresee the use of:
- a continuous transporting system of rolling-mill stock transversal with respect to their predetermined cut length, with advancement stopping means in at least one collecting station;
- transfer means of the rolling-mill stock with overhead collection with a series of suspended rotatable electromagnets, in association with lifting means that remove from below the feeding line the said rolling-mill stock and lift them above the said feeding line, to supply them below or above the said series of suspended electromagnets, the said series of suspended electromagnets oscillating from the said collecting position above a packing zone to place the rolling-mill stock in a packing pocket.

The solution of the patent IT-UD91A000031 is however very advantageous when compared to the solution of the patent IT-UD91A000030 for the fact that in IT-UD91A000031 the suspended transfer means never interferes below the advancement line (as does IT-UD91A000030 in certain instances).

Both these solutions however have a critical restriction of operative packing speed, deriving from mechanical co-ordination solutions between the said rolling-mill stock transfer means with overhead collection and the said lifting means.

Similary EP-A-0511 481, on which the preamble of claim 1 is based, discloses a similar apparatus, utilising an overturning arm transfer means, placed above the bar advancing line, to transfer stock bar layers, one above the other in packaging zone.

EP-A-0544 972, discloses single hanging transfer means and overturning arm transfer means placed under the bar advancing line. All these solutions do not allow the reaching of high speed packing because one transfer apparatus is obliged to wait the operation of the other.

The scope of the present invention is to increase the productivity of the plant by means of increasing the speed of the packing phase.

The present invention, according to the characteristics of the enclosed claim, solves the problem by means of a packing plant for rolling-mill stock with a device to increase the transfer speed to packaging zone, comprising
- a continuous transport system for moving a rolling-mill stock layer transversally with respect to its predetermined cut length along an advancement line;
- a collecting station located before said packing zone in the advancement direction and provided with advancement stopping means for stopping the advancement of a rolling-mill stock layer;
- transfer means having overhead collecting means comprising first suspended rotatable electromagnetic means associated with lifting means which acts to remove a rolling-mill stock layer from below said transport system and raising it above said transport system in order to supply it to below said first suspended rotatable electromagnetic means; said first suspended rotatable electromagnetic means oscillating from said collecting station to said packing zone to place a multi-layer of rolling-mill stock in a packing pocket, characterised in that the plant further comprises :
- a superimposing station located before said collecting station in the advancement direction provided with further advancement stopping means for stopping the advancement of a rolling-mill stock layer at said superimposing station; and
- a device arranged before said overhead collecting means comprising further suspended electromagnetic collecting means located at said superimposing station and movable upwards and downwards for superimposing a preceding rolling-mill stock layer on the top of a subsequent one; whereby
   (a) said advancement stopping means acts to simultaneously stop the advancement of a first rolling-mill stock layer at said superimposing station below said second suspended electromagnetic collecting means and the advancement of an already formed multi-layer of rolling-mill stock at the collecting station below said first transfer means and above said lifting means; whereby
   (b) said second suspended electromagnetic collecting means acts to collect and raise said first rolling-mill stock layer while said lifting means raises said already formed multi-layer of rolling-mill stock in order to fix it below said first suspended rotatable electromagnetic means, whereby thereafter said lifting means lowers below said transport system in order not to interfere with the advancement; whereby
   (c) a subsequent rolling-mill stock layer is advanced while said first transfer means deposits said previously formed multi-layer of rolling-mill stock in said packing pocket; and whereby
   (d) said further advancement stopping means acts to stop the advancement of said subsequent rolling-mill stock layer at said superimposing station below said second suspended electromagnetic collecting means and thereafter said first suspended rolling-mill stock already picked up is deposited on the top of said subsequent rolling-mill stock layer by lowering said second suspended electromagnetic collecting means while said transfer means returns above said lifting means.

The advantages obtained with this innovation consist fundamentally in the fact that the bottle-neck occurring in the packing phase is eliminated, allowing the respective transfer means to transfer a double layer of rolling-mill stock at a time while at the same time the device at the beginning provides the formation of a double layer using a double advancement of the advancement line.

In this way the speed is doubled.

These and other advantages will appear from the subsequent description of illustrated preferential solutions of realization in connection with the enclosed drawings.

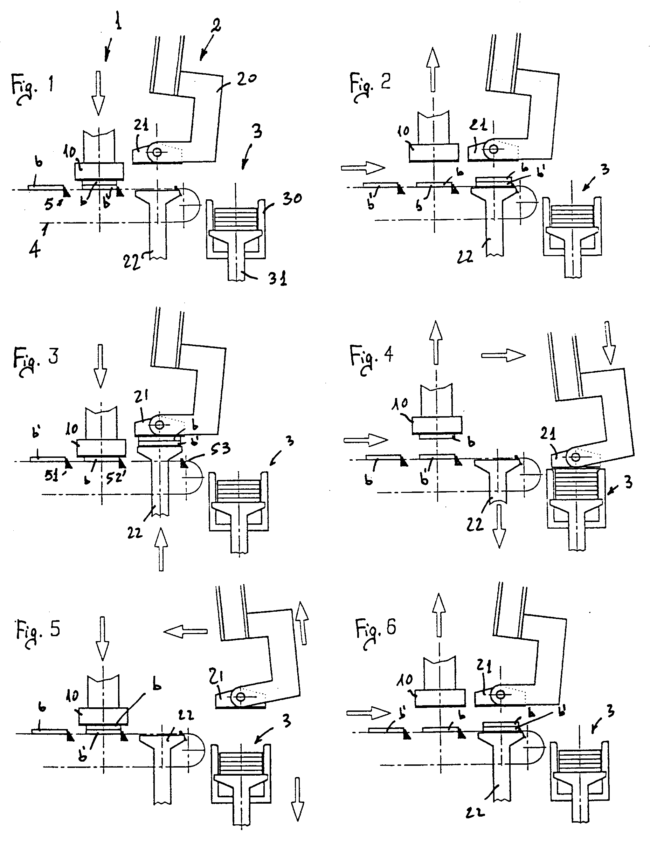

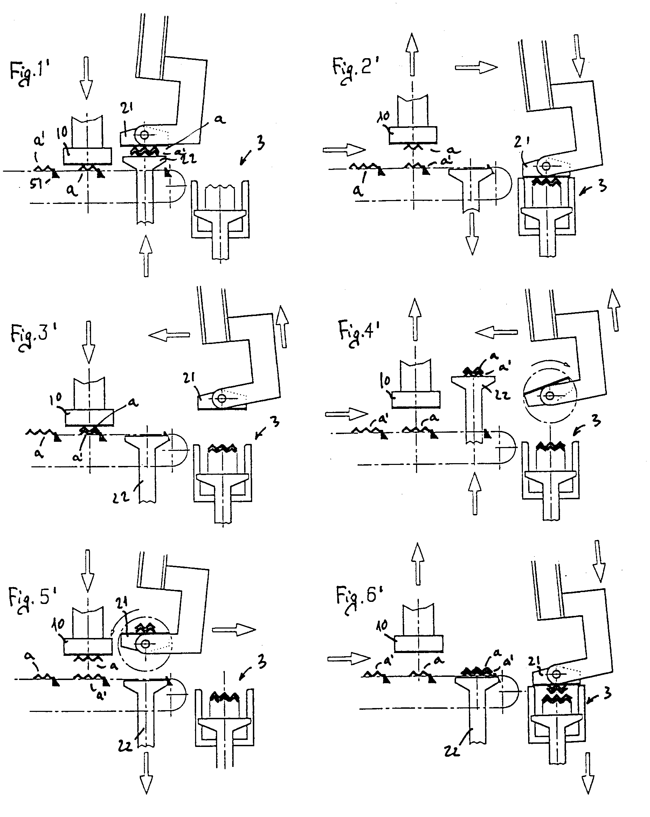

Figures 1 to 6 represent the successive phases of a plate packing cycle (in this specific case one plate at a time, with transfer to the packer of two plates at a time);
Figures 1' to 6' represent the successive phases of a packing cycle of angulars in upright and overturned layers, in this specific case two layers of "n" upright angulars and two layers of "n-1" overturned angulars, but it is obvious that different packing combinations can also be made, this being used only as a preferential example.

From the figures it is more clearly understood that the plant includes:
- an endless advancement line (4) (chains or belt) of transversely arranged rolling-mill stock, e.g. plates (b) or angulars (a) or any other rolling-mill stock to be packed in a packing zone (3);
- a series of advancement stops (5) of rolling-mill stock:
   - for the formation of one layer at a time with a pre-determined number of rolling-mill stock (51);
   - for the formation of a double layer (52) and
   - for the collection of transfer to the packing pocket (53).
- A station for forming a double layer involving a lifter of rolling-mill stock layer with a row of suspended electromagnets (10) (at least two magnets horizontally and transversely aligned, to raise the layer), to superimpose a previous layer (a/b) over a subsequent one (b'/a'), in order that double layers in superimposition (a-a'/b-b') advance from this station;
- A collecting station (2) double layers (a-a' /b-b', 53) by means of:
   - first transfer means (20) with a series of suspended rotatable electromagnets (21), (a horizontal row of electromagnets transversely arranged, - at least two -),
   - that co-operate with second lifting means underlying (21) the said double layers (a-a' /b-b') in order to stick them to the first;
- A packing station (3) involving a packing pocket (30) and lifting means (31) that can be lowered progressively to favour the deposition and formation of the package from the said first means (20-21) . From the figures it is more clearly understood that while in the solution of the plates (Fig.1-6) the operations normally proceed without overturning of the electromagnets (21), in figures from 1' to 6', the said electromagnets rotate in order to allow the overturning.
The phases of figures 1-6 are the following:
Fig.1 - formation of the double layer of bars b-b' by means of the electromagnetic lifting device (10).
Fig.2 - advancement of the rolling-mill stock;
Fig.3 - lowering of the double layer forming device (10) for the raising of the rolling-mill stock b and raising of the double layer of rolling-mill stock b-b' by the lifter (22) in order to fasten it below the suspended electromagnets (21):
Fig.4 - lowering of the lifter (21) below the advancement line (4) and advancement of the second layer of bars b', while the transfer means (20-21), transfers the double layer b-b' to the packing zone (3);
Fig. 5 - lowering of the first layer of bars b on top of the second layer of bars n' in the double layer formation zone (52);
Fig. 6 - advancement of a new layer of bars b to the double layer formation zone and of the double layer b-b' in the collecting zone (2).

In figures 1-6 only one flat rolling-mill stock is shown as an example, but it is clear that the number forming the layer may be that considered the most convenient (only one flat rolling-mill stock could be utilized for wide plates only).

In the case of the packing of angle section bars or "angulars", as is known for an efficient connection, one deposits one upright layer (Eg. three ="n" bars) and one overturned layer eg. two=n-1 bars) Figs.1'-6'.

Obviously the number of bars may be that considered the most convenient, being three and two angulars in the figures used as an example only.

In such a case in the zone of the formation of bar layers at the beginning (51), layers of "n" and "n-1" bars will be formed alternatively every two layers (solution however not limitative) according to known techniques, in order that the first double layer is formed by two layers of "n" bars and the second by two layers of "n-1" bars etc.

In particular the phases of the figures 1'-6', that regard the angulars are the following:
Fig.1' - after having advanced a first layer of "n-1" angulars "a", raising of a double layer of "n" angulars a-a' by means of the lifter (22);
Fig.2' - after being raised the first layer of "n-1" angulars "a" by the lifter (10), advancement of the second layer of "n-1" angulars a' below this while the transfer means (20-21) deposits the double layer of "n" angulars a-a' in the packer (3) pocket (30);
Fig.3' - deposition of the first layer of n-1 angulars "a" on top of the second a' while the transfer means (20-21) returns to the starting position;
Fig.4' - after advancement of a new layer of "n" angulars, raising of the double layer of n-1 angulars a-a' and rotation in overturning of the magnets (21) for the collection from below the said double layer;
Fig.5' - after raising of the new layer of "n" angulars "a" advancement of the new second layer a' and contemporaneous rotation of 180° of the transfer magnets (21) and the transfer towards the packing zone;
Fig. 6' - after formation of a new double layer of "n" angulars, further advancement for the repetition of the cycle and deposition of the double layer of "n-1" angulars to the packing pocket in the packing zone (3).
Obviously exposed above is the formation of a double layer, nothing prevents the formation of a triple layer, or at any rate more layers, before transfer to the packing.

## Claims

1. A packing plant for rolling-mill stock with a device to increase the transfer speed of said rolling-mill stock to a packing zone (3), comprising :
- a continuous transport system (4) for moving a rolling-mill stock layer (a, a'; b; b') transversally with respect to its predetermined cut length along an advancement line;
- a collecting station (2) located before said packing zone (3) in the advancement direction and provided with advancement stopping means (53) for stopping the advancement of a rolling-mill stock layer (a, a'; b; b');
- transfer means having overhead collecting means comprising first suspended rotatable electromagnetic means (21) associated with lifting means (22) which acts to remove a rolling-mill stock layer (a, a'; b; b') from below said transport system (4) and raising it above said transport system (4) in order to supply it to below said first suspended rotatable electromagnetic means (21), said first suspended rotatable electromagnetic means (21) oscillating from said collecting station (2) to said packing zone (3) to place a multi-layer of rolling-mill stock in a packing pocket (30), characterised in that the plant further comprises :
- a superimposing station (1) located before said collecting station (2) in the advancement direction provided with further advancement stopping means (52) for stopping the advancement of a rolling-mill stock layer (a, a'; b; b') at said superimposing station (1); and
- a device arranged before said overhead collecting means comprising further suspended electromagnetic collecting means (10) located at said superimposing station (1) and movable upwards and downwards for superimposing a preceding rolling-mill stock layer (a;b) on the top of a subsequent one (a'; b'); whereby
(a) said advancement stopping means (52,53) acts to simultaneously stop the advancement of a first rolling-mill stock layer (a; b) at said superimposing station (1) below said second suspended electromagnetic collecting means (10) and the advancement of an already formed multi-layer of rolling-mill stock (a, a'; b; b') at the collecting station (2) below said first transfer means and above said lifting means (22); whereby
(b) said second suspended electromagnetic collecting means (10) acts to collect and raise said first rolling-mill stock layer while said lifting means (22) raises said already formed multi-layer of rolling-mill stock in order to fix it below said first suspended rotatable electromagnetic means (21), whereby thereafter said lifting means (22) lowers below said transport system (4) in order not to interfere with the advancement; whereby
(c) a subsequent rolling-mill stock layer (a'; b') is advanced while said first transfer means (2) deposits said previously formed multi-layer of rolling-mill stock (a, a'; b; b') in said packing pocket (30); and whereby
(d) said further advancement stopping means (52) acts to stop the advancement of said subsequent rolling-mill stock layer (a';b') at said superimposing station (1) below said second suspended electromagnetic collecting means (10) and thereafter said first suspended rolling-mill stock (a;b) already picked up is deposited on the top of said subsequent rolling-mill stock layer (a';b') by lowering said second suspended electromagnetic collecting means (10) while said transfer means (2) returns above said lifting means (22).

## Patentansprüche

1. Eine Verpackungsanlage für Walzmaterial mit einer Vorrichtung zur Steigerung der Transfergeschwindigkeit des besagten Walzmaterials zu einem Verpackungsbereich (3), bestehend aus:
- einem kontinuierlicheren Transportsystem (4), um die Walzmateriallage (a, a'; b; b) quer hinsichtlich ihrer vorbestimmten Schnittlänge und entlang einer Förderlinie zu bewegen;
- einer Sammelstation (2), die sich vor besagtem Verpackungsbereich (3) in Förderungsrichtung befindet, und die versehen ist mit einer Förderungsunterbrechung (53) zur Unterbrechung der Beförderung einer Walzmateriallage (a, a'; b; b');
- einem Transfermittel mit obenliegendem Sammelmittel, mit einem ersten hängenden, drehbaren, elektromagnetischen Mittel (21), verbunden mit einem Hebemittel (22), welches eine Walzmateriallage (a, a'; b; b) von unten des genannten Transportsystem (4) oberhalb des besagten Transportsystems (4) befördert, um es unterhalb des besagten ersten hängenden, drehbaren, elektromagnetischen Mittel zuzuführen (21), besagtes erstes hängendes, drehbares, elektromagnetische Mittel (21) schwingt von besagter Sammelstation (2) zu besagtem Verpackungsbereich (3) um eine Mehrfachlage des Walzmaterials in einer Verpackungstasche zu plazieren (30), gekennzeichnet dadurch, daß die Anlage im weiteren besteht aus:
- einer Überlagerungsstation (1), die sich vor besagter Sammelstation (2) in Förderungsrichtung befindet, versehen mit einem weiteren Förderungsunterbrechungsmittel (52) zur Förderungsunterbrechung einer Walzmateriallage (a, a'; b; b) in besagter Überlagerungsstation (1); und
- einer Vorrichtung, die sich vor besagtem obenliegenden Sammelmittel befindet, versehen mit einem weiteren hängenden, elektromagnetischen Sammelmittel (10), die in besagter Überlagerungsstation (1) liegt und zum Aufeinanderlegen einer vorhergehenden Walzmateriallage (a;b) auf die darauffolgende (a'; b') auf- und abwärts beweglich ist, wodurch
(a) besagtes Förderungsunterbrechungsmittel (52,53) eingreift, um gleichzeitig die Förderung einer ersten Walzmateriallage (a; b) in besagter Überlagerungsstation (1) unterhalb des besagten zweiten hängenden, elektromagnetischen Sammelmittels (10) und die Förderung einer vorgeformten Mehrfachlage des Walzmaterials (a, a'; b; b) in der Sammelstation (2) unterhalb des besagten ersten Transfermittels und oberhalb des besagten Hebemittels (22) aufzuhalten; wodurch
(b) besagtes zweites hängendes, elektromagnetisches Sammelmittel (10) eingreift, um die besagte erste Walzmateriallage aufzulesen und hochzuheben, während besagtes Hebemittel (22) die besagte vorgeformte Mehrfachlage des Walzmaterials anhebt, um sie unterhalb des besagten ersten hängenden, drehbaren, elektromagnetischen Mittels zu befestigen (21), wodurch besagtes Hebemittel (22) sich darauf unterhalb des besagten Transportsystems (4) senkt, um die Förderung nicht zu stören; wodurch
(c) eine darauffolgende Walzmateriallage (a'; b) weiterbefördert wird, während besagtes erstes Transfermittel (2) die besagte vorgeformte Mehrfachlage des Walzmaterials (a, a'; b; b) in besagter Verpackungstasche (30) absetzt; und wodurch
(d) besagtes weiteres Förderungsunterbrechungsmittel (52) eingreift, um die Förderung von besagter darauffolgender Walzmateriallage (a';b') in besagter Überlagerungsstation (1), unterhalb des besagten zweiten hängenden, elektromagnetischen Sammelmittel (10) aufzuhalten, darauf wird das schon aufgenommene besagte erste hängende Walzmaterial (a;b) oben auf die besagte darauffolgende Walzmateriallage (a';b') durch Senken des besagten zweiten hängenden, elektromagnetischen Sammelmittels (10) abgesetzt, während besagtes Transfermittel (2) oberhalb des besagten Hebemittels in seine Position zurückkehrt (22).

## Revendications

1. Un équipement d'emballage pour les barres laminées avec un dispositif pour augmenter la vitesse de transfert de ces barres laminées à une zone d'emballage (3), comprenant:
- un système de transport continu (4) pour le transfert d'une couche de barres laminées (a, a'; b; b') transversalement par rapport à sa longueur de coupure prédéterminée le long d'une ligne d'avancement;
- une station de ramassage (2) situé avant la zone d'emballage (3) dans la direction d'avancement et pourvu de moyens d'arrêt de l'avancement (53) pour arrêter l'avancement d'une couche de barres laminées (a, a'; b; b');
- moyens de transfère pourvu de moyens de ramassage en hauts comprenant premiers moyens de suspension électromagnétiques tournants (21) associé avec les moyens de soulèvement (22) qui sert à déplacer une couche de barres laminées (a, a'; b; b') du dessous du dit système de transport (4) et le soulevant au-dessus du dit système de transport (4) afin de fournir du dessous du dit premiers moyens de suspension électromagnétiques tournants (21), dit premiers moyens de suspension électromagnétiques tournants (21) oscillant de la dite station de ramassage (2) à dite zone d'emballage (3) pour placer une pluralité de couches de barres laminées dans une poche d'emballage (30), caractérisé en ce que l'équipement comprend en plus:
- une station de superimposition (1) localisé avant de dite station de ramassage (2) dans la direction d'avancement pourvue d'autres moyens d'arrêt de l'avancement (52) pour arrêter l'avancement d'une couche de barres laminées (a, a'; b; b') à dite station de superimposition (1); et
- un dispositif arrangé avant de dits moyens de ramassage en hauts comprenant en outre moyens de ramassage électromagnétiques de suspensions (10) localisé dans la dite station de superimposition (1) et mobile vers le haut et vers le bas pour superposer une couche de barres laminées précédante (a;b) au dessus d'une couche subséquente (a'; b'); par lequel
(a) dits moyens d'arrêt de l'avancement (52,53) agit avec un arrêt simultané de l'avancement d'une premières couche de barres laminées (a; b) dans dite station de superimposition (1) au dessous du dit deuxième moyen de ramassage électromagnétiques de suspension (10) et l'avancement de une pluralité de couches de barres laminées déjà formées (a, a'; b; b') à la station de ramassage (2) au dessous du dit premiers moyens de transfère et au-dessus de dit moyens de soulèvement (22); par lequel
(b) dit deuxième moyen de ramassage électromagnétiques de suspension (10) agit pour collecter et soulever dites premières couche de barres laminées tandis que dits moyens de soulèvement (22) soulève dite pluralité de couches de barres laminées déjà formé afin de la placer au dessous du dit premiers moyens de suspension électromagnétiques tournants (21), par lequel par la suite dits moyens de soulèvement (22) s'abaissent au dessous du dit système de transport (4) pour ne pas interférer avec l'avancement; par lequel
(c) une couche de barres laminées subséquente (a'; b') est avancée tandis que dit premiers moyens de transfère (2) dépose dit pluralité de couches de barres laminées précédemment formée (a, a'; b; b') dans dite poche d'emballage (30); et par lequel
(d) dit ultérieur moyens d'arrêt de l'avancement (52) agit pour arrêter l'avancement du dit couche de barres laminées subséquente (a';b') à dite station de superimposition (1) au dessous du dit deuxième moyen de ramassage électromagnétiques de suspension (10) et par la suite dites première barre laminée suspendue (a;b) déjà cueillie est déposé au dessus de la dite couche de barres laminées subséquente (a';b') en abaissant dit deuxième moyen de ramassage électromagnétiques de suspension (10) tandis que dit moyen de transfère (2) retourne au-dessus de dits moyens de soulèvement (22).
